# EUROPÄISCHE PATENTANMELDUNG

(11) **EP 4 631 616 A1**
(43) Veröffentlichungstag der Anmeldung: **15.10.2025**
(21) Anmeldenummer: 25160022.7
(22) Anmeldetag: 25.02.2025
(51) Int. Cl.: B01J 20/28, B01J 47/012, B01J 47/022, B01J 47/024

(54) **EINRICHTUNG ZUM ENTFERNEN VON UNERWÜNSCHTEN BESTANDTEILEN**

(30) Priorität: 11.03.2024 DE 102024000806
(71) Anmelder: Hydac Filter Systems GmbH, 66280 Sulzbach/Saar (DE)
(72) Erfinder: Bauer, Martin, 66822 Lebach (DE); Hegmann, Martin, 66453 Gersheim (DE)
(74) Vertreter: Bartels und Partner, Patentanwälte

(57) **Zusammenfassung**

1. Einrichtung

2. Einrichtung zum Entfernen von unerwünschten Bestandteilen, wie Ionen und Säuren, aus einem fluiden Medium unter Einsatz mindestens eines Wirkmediums (20), insbesondere in Form eines lonentauscherharzes und/oder Molekulasiebs, das in einer Verpackung (10) aufgenommen ist, dadurch gekennzeichnet, dass die Verpackung (10) flexibel ist und zwei einander gegenüberliegende Abschlussteile (12, 14) aufweist, die das fluide Medium durchlassen und zwischen sich ein Mantelteil (16) aufnehmen, das eine geringere Fluiddurchlässigkeit gegenüber den beiden Abschlussteilen (12, 14) aufweist, und dass das Mantelteil (16) einen Hohlraum (18) umfasst, der nur zum Teil mit dem Wirkmedium (20) befüllt ist.

## Beschreibung

### Einrichtung

Die Erfindung betrifft eine Einrichtung zum Entfernen von unerwünschten Bestandteilen, wie Ionen und Säuren, aus einem fluiden Medium unter Einsatz mindestens eines Wirkmediums, insbesondere in Form eines lonentauscherharzes, das in einer Verpackung aufgenommen ist.

Durch DE 39 03 343 C2 ist eine Vorrichtung nebst zugehörigem Verfahren zur Abwasserreinigung durch Ionentauscherharze bekannt, mit mehreren vertikal vom Schmutzwasser durchströmten Beladungsbehältern und einem gemeinsamen Regenerierungsbehälter, der taktweise mit einem der Beladungsbehälter verbindbar ist und in dem durch Zusatz geeigneter Reagenzien die von den Beladungsbehältern abgezogenen Ionentauscherharze wieder in den reaktionsfähigen Zustand versetzt werden, wobei ein erstes Teilvolumen des Ionentauscherharzes aus dem unteren Bereich eines Beladungsbehälters zum Regenerierungsbehälter gefördert, dort stufenweise regeneriert, und dann wieder in den oberen Bereich des Beladungsbehälters zurückgeführt wird und wobei das Schmutzwasser weiterhin von dem im Beladungsbehälter verbliebenen zweiten Teilstrom des Ionentauscherharzes gereinigt wird, indem es den Beladungsbehälter von unten nach oben durchsetzt. Während jedes Regenerierungstaktes werden sowohl die Regenerierungschemikalien als auch das Spülwasser zweimal zur stufenweise Regenerierung des Ionentauscherharzes benutzt und erst dann zur weiteren Verwendung oder Aufbereitung abgegeben. Dergestalt ist eine verbesserte Wirtschaftlichkeit geschaffen durch Einsatz einer Vor-Regenerierung und einer End-Regenerierung.

Durch DE 10 2012 024 428 B4 ist ein Ionentauscher für einen Kühlmittelkreislauf bekannt, mit einem Gehäuse, das einen Zulauf und einen Ablauf für ein Kühlmittel aufweist, wobei im Gehäuse ein lonentauschermittel aufgenommen ist. Das Gehäuse besteht aus Kunststoff und ist als Spritzgussbauteil hergestellt, wobei sowohl im Ablauf als auch im Zulauf jeweils ein Kunststofffilterelement angeordnet ist, das vom Kunststoff umspritzt ist, wobei in randseitigen Poren des Kunststofffilterelementes ein Kunststoffmaterial des Gehäuses aufgenommen ist. Dergestalt kann ein Ionentauscher in Kühlmittelkreisläufen eingesetzt werden, um positiv bzw. negativ geladene Ionen aus dem Kühlmittel zu entfernen. Derartige Kühlmittelkreisläufe werden regelmäßig in Brennstoffzellensystemen zur Kühlung eingesetzt, in denen auf elektrochemischem Weg Strom erzeugt wird, beispielsweise zum Antrieb eines Elektromotors in einem Fahrzeug.

Ausgehend von diesem Stand der Technik liegt der Erfindung die Aufgabe zugrunde eine Einrichtung mit einem Ionentauscherharz vorzusehen, die funktionssicher und kostengünstig realisierbar ist und sich für eine Vielzahl von Anwendungsfällen verwenden lässt.

Eine dahingehende Aufgabe löst eine Einrichtung mit den Merkmalen des Patentanspruches 1 in seiner Gesamtheit.

Dadurch, dass gemäß dem kennzeichnenden Teil des Patentanspruches 1 die Verpackung flexibel ist und zwei einander gegenüberliegende Abschlussteile aufweist, die das fluide Medium durchlassen und zwischen sich ein Mantelteil aufnehmen, das eine geringere Fluiddurchlässigkeit gegenüber den beiden Abschlussteilen aufweist und dass das Mantelteil einen Hohlraum umfasst, der nur zum Teil mit dem Wirkmedium befüllt ist, ist eine handelbare Baueinheit zusammen mit dem Ionentauscherharz geschaffen, die sich vielfältigst in der Praxis verwenden lässt. Dergestalt lassen sich vor Ort ohne größere Anpassungen an einem Gesamtsystem sowohl Hydraulik- und Schmieröle als auch Wasser und Wasser-Glykol-Gemische sowie andere Kühlmittel aufbereiten, indem sich unerwünschte Ionen und Säuren aus dem jeweiligen Fluid entfernen lassen. Des Weiteren lässt sich auch ein Ionentausch durchführen. Die Einrichtung ist funktionssicher im Betrieb und lässt sich bedarfsweise kostengünstig herstellen sowie auch in größerer Stückzahl zeitnah zur Verfügung stellen.

Die Erfindung betrifft des Weiteren eine Vorrichtung zur Aufnahme einer solchen Einrichtung sowie ein Verfahren zur Inbetriebnahme der Vorrichtung mit der jeweiligen Einrichtung.

Bei einer bevorzugten Ausführungsform der erfindungsgemäßen Einrichtung ist vorgesehen, dass der Hohlraum der Verpackung derart mit dem Wirkmedium befüllt ist, dass ausgehend von einem Ausgangszustand, bei dem die Verpackung einen größeren Durchmesser und eine kleinere Länge hat, in einen Einbauzustand überführbar ist, bei dem der Durchmesser demgegenüber verringert und die Länge vergrößert ist. Vorzugsweise besteht dabei die Verpackung aus einem entsprechend nachgiebigen Beutel oder einem Sack, der zumindest teilweise für das fluide Medium durchlässig ist und dabei gleichzeitig das Wirkmedium im Hohlraum der Verpackung zurückhält. Dergestalt ist die Einrichtung als Baueinheit respektive Stückgut von ihrer Gestalt her an vorgegebene Einbausituationen ohne Weiteres anpassbar, was die Einsatzmöglichkeiten für die Einrichtung gegenüber bekannten Lösungen mit starrem Aufbau deutlich erhöht.

Bei einer weiteren bevorzugten Ausführungsform der erfindungsgemäßen Einrichtung ist vorgesehen, dass die beiden Abschlussteile zum einen in

Form eines Deckels und zum anderen in Form eines Bodens einen geringeren Durchflusswiderstand für das durchströmende Fluidmedium aufweisen als das Mantelteil der Verpackung. Dergestalt ist innerhalb der Verpackung zwanglos eine bevorzugte Fluidströmungsrichtung für das jeweilige fluide Medium vorgegeben, so dass es gezielt zu einer unmittelbaren Kontaktaufnahme zwischen fluidem Medium und dem jeweils aufgenommenen Wirkmedium kommt, insbesondere in Form des Ionentauscherharzes.

Bei einer weiteren bevorzugten Ausführungsform der erfindungsgemäßen Einrichtung ist vorgesehen, dass das hülsenförmig konzipierte Mantelteil beim Durchströmen der Verpackung mit dem fluiden Medium einen höheren Druckverlust als der Boden und der Deckel verursacht und dahingehend die Fluidströmung lenkt, bei gleichzeitigem Ausbauchen des hülsenförmigen Mantelteils. Vorzugsweise besteht dabei der Deckel und der Boden aus jeweils einem gröberen Gewebe mit einer bevorzugten Maschenweite von etwa 50 *µ*m, wobei das hülsenförmige Mantelteil aus einem demgegenüber feineren Multifilament-Gewebe besteht mit einer bevorzugten Luftdurchlässigkeit von < 15l/m²/s bei 200 Pascal Flüssigkeitsdruck. Dergestalt ist sichergestellt, dass das Wirkmedium respektive das Ionentauscherharz sicher innerhalb der Verpackung der Einrichtung verbleibt und dennoch weitgehend ungestört der Fluiddurchfluss für das jeweils fluide Medium zwecks Abreinigen vonstattengehen kann.

Bei einer weiteren bevorzugten Ausführungsform der erfindungsgemäßen Einrichtung ist vorgesehen, dass alle einzelnen Komponenten des Beutels oder Sacks vernäht sind und dass die Nähte zumindest teilweise bevorzugt auf der Innenseite der dahingehenden Verpackung angebracht sind. Dergestalt ist eine besonders robuste, kostengünstige Verpackungslösung geschaffen und soweit etwaige Nähte auf der Innenseite angebracht sind, unterliegen sie keinem weiteren Verschleiß durch Abrieb, welcher ansonsten zum Aufgehen der Nähte führen könnte.

Bei einer weiteren bevorzugten Ausführungsform der erfindungsgemäßen Einrichtung ist vorgesehen, dass der Beutel oder Sack mit einer Handschlaufe versehen ist, die bevorzugt mit vorgebbarem Abstand den Deckel der Verpackung übergreift und randseitig mit der Außenseite des Mantelteils verbunden, vorzugsweise vernäht, ist. Die Handschlaufe verbessert dabei die Handhabung für den Beutel oder Sack und erleichtert insbesondere das Ein- oder Ausbringen desselben vor Ort.

Die Erfindung betrifft des Weiteren eine Vorrichtung zur Aufnahme der Einrichtung wie vorstehend beschrieben, die dadurch gekennzeichnet ist, dass ein Korb für die Aufnahme der Einrichtung vorgesehen ist, der gegenüber der Einrichtung eine größere Einbaulänge und einen fluiddurchlässigen Abstützboden aufweist, an dem sich der Boden der Einrichtung in deren Einbauzustand abstützt. Vorzugsweise ist dabei ferner vorgesehen, dass der Korb in einem Vorrichtungsgehäuse derart aufgenommen ist, dass zwischen Korb- und benachbarter Gehäusewand zumindest teilweise ein Strömungsraum gebildet ist, der eine Fluidströmung des fluiden Mediums von einem Fluideingang des Vorrichtungsgehäuses zu der Einrichtung und von dieser zu einem Fluidausgang des Vorrichtungsgehäuses ermöglicht, und dass im Betriebszustand der Vorrichtung die Einrichtung über ihren Deckel und ihren Boden von oben nach unten in einer Richtung durchströmt ist. Dergestalt ist die beutel- oder sackartige Einrichtung mit dem Wirkmedium, insbesondere in Form des Ionentauscherharzes, in eine Gesamtvorrichtung integrierbar, um auch in größerem Prozessmaßstab fluide Medien sicher abzureinigen respektive von Ionen und Säuren als jeweils unerwünschtem Bestandteil zu befreien.

Bei einer besonders bevorzugten Ausführungsform der erfindungsgemäßen Vorrichtung ist vorgesehen, dass das Vorrichtungsgehäuse rohrförmig ausgebildet ist und ein abnehmbares Deckelteil aufweist und an seinem Fußteil den Fluidein- sowie den Fluidaustritt aufweist und des Weiteren fußseitig eine Entleerstelle besitzt, die verschließbar in den Strömungsraum zwischen Korb- und Vorrichtungsgehäuse ausmündet. Vorzugsweise weist dabei das Fußteil des Vorrichtungsgehäuses als Teil desselben eine Aufnahme für das fußseitige Ende des hohlzylindrischen Korbes auf und der Korb weist an seinem, dem Korbboden gegenüberliegenden kopfseitigen Ende mindestens zwei Langlöcher auf, in die eine bevorzugt vor dem Betrieb mit der Vorrichtung entfernbare Handhabe einsetzbar ist. Dergestalt lässt sich in einfacher Weise der Korb mit der jeweiligen Einrichtung in dem Vorrichtungsgehäuse unterbringen und dank der Langlöcher im Korb kann ausgehend von dem Strömungsraum ungehindert das zu behandelnde fluide Medium von oben nach unten die beutel- oder sackartige Einrichtung mit dem Wirkmedium durchfließen.

Die Erfindung betrifft des Weiteren ein Verfahren zur Inbetriebnahme der Vorrichtung mit einer zugehörigen Einrichtung, wobei in einem
- ersten Schritt eine Verpackung der Einrichtung zunächst bestehend aus einem Deckel und einem Mantelteil mit einem Wirkmedium befüllt und dann mit einem Boden verschlossen wird,
- zweiten Schritt die Einrichtung in einem Korb innerhalb oder außerhalb eines Vorrichtungsgehäuses derart platziert wird, dass der Boden der Verpackung auf einem fluiddurchlässigen Boden des Korbes aufsitzt, und
- dritten Schritt bei im Vorrichtungsgehäuse eingesetzten Korb mit der Einrichtung ein Deckelteil mit dem Vorrichtungsgehäuse verbunden wird.

Vorzugsweise ist dabei ferner vorgesehen, dass in einem vierten Schritt die Einrichtung vonseiten des Deckels zu ihrem Boden mit einem fluiden Medium durchströmt wird und dass dabei das Mantelteil der Einrichtung sich vorzugsweise abstands- und faltenfrei auf der Innenseite der Korbwand unter Bilden einer Abdichtung zwischen Einrichtung und Korb anlegt. Dergestalt ist in kostengünstiger und funktionssicherer Weise eine Behandlung des jeweiligen fluiden Mediums ermöglicht und aufgrund der angesprochenen Abdichtung zwischen Einrichtung und Korb innerhalb des Vorrichtungsgehäuses ist sichergestellt, dass verlustfrei das zu behandelnde fluide Medium auch die Einrichtung durchquert und nicht im Bypass- oder Nebenstrom an der Einrichtung vorbeigeleitet wird, was zu Strömungsverlusten führen könnte.

Im Folgenden wird die erfindungsgemäße Einrichtung sowie die Vorrichtung zur Aufnahme der Einrichtung nebst zugehörigem Verfahren zur Inbetriebnahme der Vorrichtung mit der Einrichtung anhand der Zeichnung näher erläutert. Dabei zeigen in prinzipieller und nicht maßstäblicher Darstellung die
- Figur 1: eine perspektivische Ansicht auf die Einrichtung in einem Einbauzustand als Ganzes;
- Figur 2: in Seitenansicht die Einrichtung nach der Figur 1 in einem Vormontage- oder Ausgangszustand auf dem Kopf stehend und mit einem Wirkmedium befüllt, dessen Füllstandshöhe mit Strichlinien angegeben ist;
- Figur 3: einen Längsschnitt durch eine Vorrichtung mit einer befüllten Einrichtung nach der Figur 1;
- Figur 4: in perspektivischer Außenansicht die Vorrichtung nach der Figur 3;
- Figur 5: einen oberen Teil der Vorrichtung nach den Figuren 3 und 4 mit abgenommenem Deckelteil.

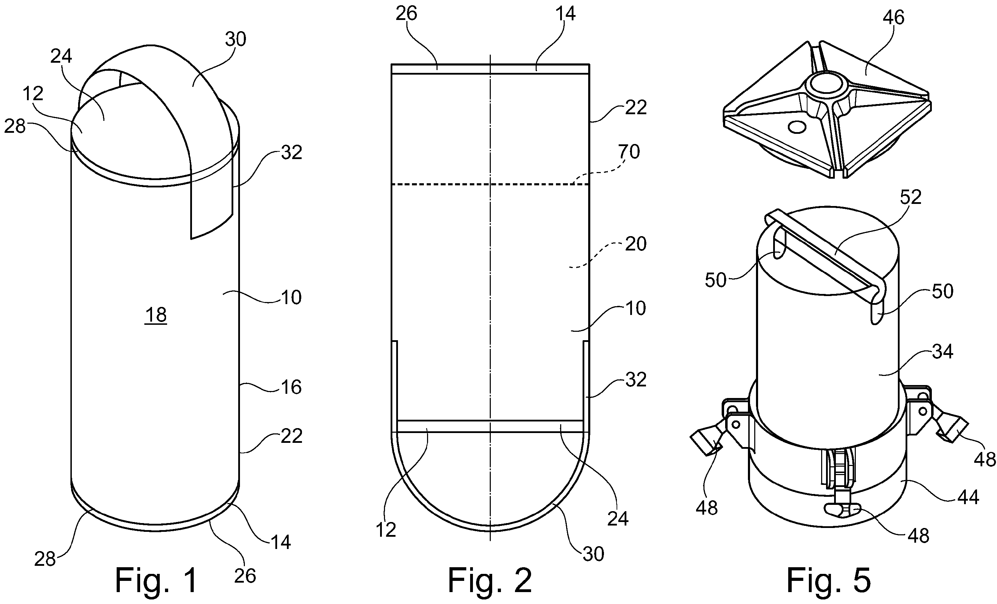

Die in Figur 1 dargestellte Einrichtung dient dem Entfernen von unerwünschten Bestandteilen, wie Ionen und Säuren, aus einem fluiden Medium unter Einsatz mindestens eines Wirkmediums 20, insbesondere in Form eines Ionentauscherharzes, das in einer flexiblen Verpackung 10 aufgenommen ist, welche zwei einander gegenüberliegenden Abschlussteile 12, 14 aufweist, die das fluide Medium durchlassen und zwischen sich ein Mantelteil 16 aufnehmen, das eine geringere Fluiddurchlässigkeit gegenüber den beiden Abschlussteilen 12, 14 aufweist, wobei das Mantelteil 16 einen Hohlraum 18 umfasst, der nur zum Teil mit dem Wirkmedium 20 befüllt ist. Das aus einem ebenen Zuschnitt bestehende Mantelteil 16 als Elementhülse ist zu einem Hohlzylinder aufgestellt, wobei die einander benachbarten Längsseiten des Mantelteils 16 miteinander verbunden sind, beispielsweise durch Anbringen einer Längsnaht (nicht dargestellt).

Als Wirkmedium 20 kommt insbesondere ein Ionentauscherharz zum Einsatz in Form eines Granulats aus runden Körnern oder in Zylinder- oder Stäbchenform mit einem Durchmesser von größer 200 *µ*m, welches in die Verpackung 10 eingefüllt wird. Als Ionentauscherharze kommen insbesondere handelsübliche Ionentauscherharze zum Einsatz. Übliche Füllvolumina für die Verpackung 10 belaufen sich zwischen 2 bis 8 Liter, bevorzugt zwischen 3 bis 7 Liter, besonders bevorzugt sind 5 Liter vorgesehen. Zusätzlich oder alternativ zu dem angesprochenen Ionentauscherharz können auch Molekularsiebe zum Einsatz kommen. Aufgrund des hohlzylindrischen Aufbaus des Mantelteiles 16 sind auch die beiden Abschlussteile 12, 14 zwangsläufig als Kreiszylinder ausgebildet. Der Hohlraum 18 der Verpackung 10 ist derart mit dem Wirkmedium 20 befüllt, dass ausgehend von einem Ausgangszustand, bei dem die flexible Verpackung 10 einen größeren Durchmesser und einer kleineren Länge hat in einen Einbauzustand überführbar ist, bei dem der Durchmesser demgegenüber verringert und die Länge vergrößert ist. Die Figur 1 zeigt insoweit den Einbauzustand für die Einrichtung und die Figur 2 den genannten Ausgangszustand, der sich beispielsweise ergibt, wenn die Verpackung 10 auf dem Kopf stehend mit dem Wirkmedium 20 bodenseitig sukzessive befüllt wird. Abzureinigende Fluide sind beispielsweise HFDR-Flüssigkeiten oder Kühlfluid im Rahmen des Betriebs von Brennstoffzellen.

Die Verpackung 10 besteht insbesondere aus einem Beutel oder einem Sack 22, der zumindest teilweise für das fluide, abzureinigende Medium durchlässig ist und dabei gleichzeitig das Wirkmedium 20, sowohl unbenutzt als auch benutzt, im Hohlraum 18 der Verpackung 10 zurücklässt. Insoweit weisen die beiden Abschlussteile 12, 14 zum einen in Form eines Deckels 24 und zum anderen in Form eines Bodens 26 einen geringeren Durchflusswiderstand für das durchströmende Fluidmedium auf als das Mantelteil 16 der Verpackung 10. Dergestalt verursacht das hülsenförmig konzipierte Mantelteil 16 beim Durchströmen der Verpackung 10 mit dem fluiden, zu behandelnden Medium einen höheren Druckverlust als der Boden 26 und der Deckel 24, so dass die Fluidströmung gelenkt ist bei einem gleichzeitigen Ausbauchen des hülsenförmigen Mantelteils 16.

Der Deckel 24 und der Boden 26 bestehen aus jeweils einem gröberen textilen Gewebe mit einer bevorzugten Maschenweite von etwa 50 *µ*m, wobei das hülsenförmige Mantelteil 16 aus einem demgegenüber feineren Multifilament-Gewebe besteht mit einer bevorzugten Luftdurchlässigkeit von < 15 l/m²/s bei 200 Pascal Luftdruck. Demgemäß werden die Körnchen des Ionentauscherharzes wirksam in der Verpackung 10 während der Fluiddurchströmung zurückbehalten, bei gleichzeitigem Erreichen eines geringen Durchflusswiderstandes im Rahmen der Durchströmung mit dem Fluid.

Alle einzelnen Komponenten des Beutels oder Sacks 22 sind miteinander vernäht, wobei die Nähte 28 zumindest teilweise bevorzugt auf der Innenseite der dahingehenden Verpackung 10 angebracht sind. Zwar ist der Elementboden 26 mit einer doppelten Naht 28 im vorliegenden Fall außenliegend am unteren Ende des Mantelteils 16 gemäß der Darstellung nach der Figur 1 angebracht; demgegenüber ist aber der Deckel 24 mit dem oberen Ende des Mantelteiles 16 gemäß der Darstellung nach der Figur 1 mit einer innenliegenden Naht 28 verbunden, so dass eine möglichst glatte Oberfläche nach außen hin entsteht und auch die bereits angesprochene Längsnaht für das Mantelteil 16 soll innenliegend sein. Alle angesprochenen Nähte 28 sind mit reißfesten Garnen, vorzugsweise aus PBT oder PET, ausgeführt. Wie sich weiter aus den Figuren 1 und 2 ergibt, ist der Beutel oder Sack 22 mit einer Handschlaufe 30 versehen, die bevorzugt mit vorgebbarem Abstand den Deckel 24 der Verpackung 10 bogenförmig, insbesondere halbkreisförmig, übergreift und dabei randseitig mit der Außenseite des Mantelteils 16 verbunden, vorzugsweise entlang eines Nahtverlaufes 32 vernäht ist. Um die Durchströmung der Einheit mit dem fluiden Medium nicht zu behindern, kann die bandförmige Handschlaufe 30 gleichfalls aus einem durchlässigen textilen Material bestehen, die ansonsten hochfest ist und beispielsweise Zugkräfte von 4000 N aufnehmen kann.

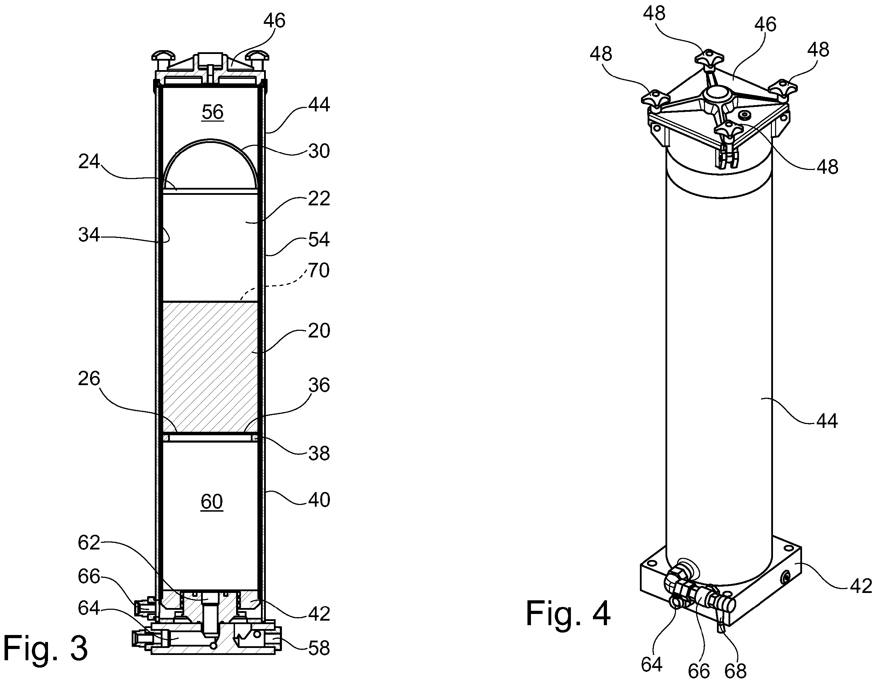

Wie sich insbesondere aus der Figur 3 ergibt, ist ein hohlzylindrischer Korb 34 für die Aufnahme der Einrichtung in Form eines Beutels oder Sacks 22 nach der Figur 1 vorgesehen. Der Korb 34 weist gegenüber der Einrichtung eine größere Einbaulänge und einen fluiddurchlässigen Abstützboden 36, beispielsweise in Form eines Lochbleches, auf, an dem sich der Boden 26 der Einrichtung in deren Einbauzustand nach der Figur 3 abstützt. Der Abstützboden 36 respektive das Lochblech stützt sich gemäß der Darstellung nach der Figur 3 wiederum bodenseitig an einem Rand 38 ab, der innenliegender Teil einer zylindrischen Einsatzhülse 40 ist, die den Korb 34 als Ganzes bildet und die sich wiederum boden- oder fußseitig an einem Endteil 42 eines zylindrischen Vorrichtungsgehäuses 44 abstützt. Das zylindrische Vorrichtungsgehäuse 44 weist kopfseitig ein Deckelteil 46 auf, das mittels vier Stück ein- und ausschwenkbarer Verschlussschrauben 48 am freien Rand des Vorrichtungsgehäuses 44 festlegbar ist. In der Figur 4 ist der festgelegte Zustand für das Deckelteil 46 zu sehen und in Figur 5 bei gelösten und zurückverschwenkten Verschlussschrauben 48 ist das Deckelteil 46 freigegeben und gegenüber dem Vorrichtungsgehäuse 44 nach oben hin abgehoben.

Die dahingehende Figur 5 zeigt in perspektivischer Ansicht die teilweise Ein- oder Ausbausituation für den Korb 34 mit oder ohne die Einrichtung in Form des Beutels oder Sacks 22. Der Korb 34 in Form des hülsenförmigen Einsatzteiles 40 weist an seinem oberen, freien stirnseitigen Endbereich zwei zu einer Längsachse der Vorrichtung diametral einander gegenüberliegende Langlöcher 50 gleicher Ausprägung auf, die als Führungen konzipiert dem Durchgriff einer Montagehilfe in Form einer entfernbaren Handhabe 52 dienen. Die Handhabe 52 kann aus einem durchgeschlauften Band gemäß der Darstellung nach der Figur 5 bestehen. Vorzugsweise ist jedoch als Handhabe 52 ein Stahlrohr im Einsatz, das mit Kabelbindern gegen Verlieren an den Langlochführungen gesichert ist. Die Langlochführungen bilden die Durchströmöffnungen aus, über die das zu behandelnde fluide Medium von außen in das Innere des Korbes 34 mit der Einrichtung eintreten kann, was sich insbesondere aus der Darstellung nach der Figur 3 ergibt. Im Zusammenbauzustand nach der Figur 3 ist jedenfalls der Korb 34 als Einsatzteil 40 vollständig in das Vorrichtungsgehäuse 44 eingeschoben, so dass von oben her das Deckelteil 46 wieder anbringbar ist in eine Betriebsstellung nach der Figur 3. Insoweit stützt sich der freie obere Rand des Korbes 34 nach Entfernen der Handhabe 52 auf der Innenseite des Deckelteiles 46 ab. Für eine Entnahme des Korbes 34, insbesondere bei eingesetzter Einrichtung, kann wiederum in die Langlöcher 50 eine Handhabe 52 erneut eingebracht werden, um das Entfernen des Korbes 34 aus dem Vorrichtungsgehäuse 44 zu erleichtern, das insoweit in der Figur 5 der Einfachheit halber nur mit seinem oberen Ende wiedergegeben ist. Es besteht aber auch die Möglichkeit den Korb 34 im Vorrichtungsgehäuse 44 zu belassen und nur die Einrichtung nach der Figur 1 über die Handhabe 30 zu tauschen.

Wenn der Korb 34 vollständig in dem Vorrichtungsgehäuse 44 aufgenommen ist, gemäß der Darstellung nach der Figur 3, ergibt sich zwischen der äußeren Korbwand und einer benachbarten Gehäusewand auf der Innenseite des Vorrichtungsgehäuses 44 ein hohlzylindrischer Strömungsraum 54, der vom Endteil 42 bis zum Deckelteil 46 reicht, wobei der dahingehende Strömungsraum 54 von den beiden Langlöchern 50 randseitig begrenzt ist, die eine Fluidverbindung respektive einen Fluidweg vom Strömungsraum 54 in das Innere 56 des Korbes 34 herstellen. Das einen bodenseitigen Abschluss für das Vorrichtungsgehäuse 44 bildende Endteil 42 weist einen Fluideingang 58 für das zu behandelnde Fluidmedium auf, das dergestalt über den Fluideingang 58 in den Strömungsraum 54 gelangt und von dort wie bereits beschrieben über die Langlöcher 50 das Innere 56 des Korbes 34 erreicht.

Wie sich weiter aus der Darstellung nach der Figur 3 ergibt, ist die Einrichtung mit dem Sack 22 und dem Wirkmedium 20 in den Korb 34 mittels der Handhabe 30 eingesetzt und stützt sich dabei mit dem Boden 26 auf dem lochblechartigen Abstützboden 36 ab. Sofern das fluide Medium mittels des Wirkmediums 20 abgereinigt über den fluiddurchlässigen Boden 26 der Einrichtung und dem Abstützboden 36 des Korbes 34 auf eine Abgabe- oder Reinseite 60 der Vorrichtung gelangt, wird das dort befindliche abgereinigte Fluid beginnend mit einem zentralen Ablauf 62 im kappenartigen Endteil 42 über den Fluidausgang 64 auf eine Reinseite eines hydraulischen Systems (nicht dargestellt) gebracht, das auch den Fluideingang 58 mit dem zu behandelnden Fluid nach Durchlaufen des Systems auf einer Schmutzseite der Vorrichtung versorgt. Der hohlzylindrische Strömungsraum 54 zwischen Korb 34 und Vorrichtungsgehäuse 44 ist spaltförmig ausgebildet, so dass nur relativ geringe Fluidmengen die Einrichtung in Blickrichtung auf die Figur 3 gesehen von oben nach unten durchqueren. Je nach Gestaltung des Wirkmediums 20 kann dies auch in der Art eines Rieselbettes konzipiert sein, so dass das zu behandelnde fluide Medium relativ lange mit dem Wirkmedium 20 in Kontakt bleibt bevor es auf die Abgabeseite 60 der Vorrichtung gelangt. Zunächst wird also das zu behandelnde Fluid im Strömungsraum 54 von unten nach oben transportiert und nach seitlichem Durchqueren der Langlöcher 50 erfolgt die Durchströmung der Einrichtung in entgegengesetzter Richtung, also von oben nach unten. Dank der Umlenkung des Fluidstroms über die Langlöcher 50 kommt es zu einer insgesamt harmonischen, turbulenzfreien Fluidströmung.

Wird die flexible Einrichtung in den Korb 34 eingesetzt, kommt es zu einer Verschiebung des Wirkmediums 20 und damit zur Verringerung des Durchmessers, so dass sich das Mantelteil 16 passgenau und im Wesentlichen faltenfrei an die Innenwand des Korbes 34 weitgehend fluiddicht anlegt. Das hülsenförmig konzipierte Mantelteil 16 verursacht insoweit beim Durchströmen der Verpackung 10 mit dem fluiden Medium im Einbauzustand nach der Figur 3 gesehen einen höheren Druckverlust als der Boden 26 und der Deckel 24, so dass die von oben nach unten geführte Fluidströmung durch die Einrichtung automatisch gelenkt ist, bei gleichzeitigem Ausbauchen des hülsenförmigen Mantelteiles 16 gegen das Innere des Rohres 34, was insoweit die Abdichtung ergibt.

Wie sich abschließend aus der Darstellung nach der Figur 4 ergibt, ist am Außenumfang des Vorrichtungsgehäuses 44 und fußseitig noch eine Entleerstelle 66 mit einem Absperrhahn 68 vorgesehen, so dass zu Wartungs- und Austauschzwecken des Korbes 34 mit und ohne Einrichtung zumindest der Strömungsraum 54 von Fluid entleert werden kann, vorzugsweise lässt sich jedoch dergestalt das Gesamtinnere des Vorrichtungsgehäuses 44 von Fluid entleeren.

Bei einem Verfahren zur Inbetriebnahme der Vorrichtung zusammen mit der Einrichtung wie vorstehend vorgestellt, wird in einem ersten Schritt eine Verpackung 10 der Einrichtung zunächst bestehend aus einem Deckel 24 und einem Mantelteil 16 mit dem Wirkmedium 20 befüllt, wobei die Einrichtung ihre kopfseitige Füllstellung nach der Figur 2 einnimmt. Ist das Wirkmedium 20 bis zur strichlinierten Füllstandshöhe 70 befüllt, wird die Einrichtung dann mit ihrem Boden 26 verschlossen. In einem zweiten Schritt wird dann die vervollständigte Einrichtung nach der Figur 2 um 180° in eine aufrechte Position nach der Figur 1 gebracht, und wird über die Handhabe 30, beispielsweise von Hand, eine vorgebbare Zugkraft aufgebracht, längt sich ausgehend von der Figur 2 geometrisch gesehen die sackartige Einrichtung und ihr Durchmesser verringert sich, wodurch sich die Füllstandshöhe 70 des Wirkmediums 20 im Hohlraum 18 zwangsläufig erhöht, was beispielhaft in der Figur 3 wiedergegeben ist. Während das Einbringen der Füllmenge in das sackartige Gebinde am Ort der Herstellung stattfindet, findet das Einsetzen der sackartigen Einrichtung in das Vorrichtungsgehäuse regelmäßig am Ort der Anwendung statt.

In einem zweiten Schritt wird dann die Einrichtung oder Einheit in dem Korb 34 innerhalb oder außerhalb des Vorrichtungsgehäuses 44, vorzugsweise bei entferntem Deckelteil 46, derart platziert, dass der Boden 26 der Verpackung 10 auf dem fluiddurchlässigen Boden respektive Abstützboden 36 des Korbes 34 flächig aufsitzt. Im nachfolgenden dritten Schritt bei bereits im Vorrichtungsgehäuse 44 eingesetzten Korb 34 mit der Einrichtung wird dann erneut das Deckelteil 46 mit dem Vorrichtungsgehäuse 44 verbunden.

In einem abschließenden vierten Prozessschritt wird die Einrichtung vonseiten des Deckels 24 zu ihrem Boden 26 mit dem fluiden, zu behandelnden Medium durchstömt, wobei das Mantelteil 16 der Einrichtung sich abstandsfrei und weitgehend faltenfrei, wie bereits beschrieben, auf der Innenseite der Korbwand unter Bilden einer Abdichtung zwischen Einrichtung und Korb 34 anlegt. Dies hat so keine Entsprechung im Stand der Technik. Ist das Wirkmedium 20 durch die Fluidbehandlung entsprechend aufgebraucht, kann die Einrichtung in Form der beschriebenen Verpackung 10 gegen ein Neuelement getauscht werden. Dabei wird regelmäßig nur die beutel- oder sackartige Verpackung 10 mit dem jeweiligen Wirkmedium 20 getauscht und der Korb 34 verbleibt im Vorrichtungsgehäuse 44.

## Patentansprüche

1. Einrichtung zum Entfernen von unerwünschten Bestandteilen, wie Ionen und Säuren, aus einem fluiden Medium unter Einsatz mindestens eines Wirkmediums (20), insbesondere in Form eines lonentauscherharzes und/oder Molekularsiebs, das in einer Verpackung (10) aufgenommen ist, **dadurch gekennzeichnet, dass** die Verpackung (10) flexibel ist und zwei einander gegenüberliegende Abschlussteile (12, 14) aufweist, die das fluide Medium durchlassen und zwischen sich ein Mantelteil (16) aufnehmen, das eine geringere Fluiddurchlässigkeit gegenüber den beiden Abschlussteilen (12, 14) aufweist, und dass das Mantelteil (16) einen Hohlraum (18) umfasst, der nur zum Teil mit dem Wirkmedium (20) befüllt ist.

2. Einrichtung nach Anspruch 1, **dadurch gekennzeichnet, dass** der Hohlraum (18) der Verpackung (10) derart mit dem Wirkmedium (20) befüllt ist, dass ausgehend von einem Ausgangszustand (Figur 2), bei dem die Verpackung einen größeren Durchmesser aufweist in einen Einbauzustand (Figur 1) überführbar ist, bei dem der Durchmesser durch Verschieben des Wirkmediums (20) demgegenüber verringert ist.

3. Einrichtung nach Anspruch 1 oder 2, **dadurch gekennzeichnet, dass** die Verpackung (10) aus einem Beutel oder einem Sack (22) besteht, der zumindest teilweise für das fluide Medium durchlässig ist und dabei gleichzeitig das Wirkmedium (20) im Hohlraum (18) der Verpackung (10) zurückhält.

4. Einrichtung nach einem der vorstehenden Ansprüche, **dadurch gekennzeichnet, dass** die beiden Abschlussteile (12, 14) zum einen in Form eines Deckels (24) und zum anderen in Form eines Bodens (26) einen geringeren Durchflusswiderstand für das durchströmende Fluidmedium aufweisen als das Mantelteil (16) der Verpackung (10).

5. Einrichtung nach einem der vorstehenden Ansprüche, **dadurch gekennzeichnet, dass** das hülsenförmig konzipierte Mantelteil (16) beim Durchströmen der Verpackung (10) mit dem fluiden Medium einen höheren Druckverlust als der Boden (26) und der Deckel (24) verursacht und dahingehend die Fluidströmung lenkt, bei gleichzeitigem Ausbauchen des hülsenförmigen Mantelteils (16).

6. Einrichtung nach einem der vorstehenden Ansprüche, **dadurch gekennzeichnet, dass** der Deckel (24) und der Boden (26) aus jeweils einem gröberen Gewebe bestehen mit einer bevorzugten Maschenweite von etwa 50 *µ*m und dass das hülsenförmige Mantelteil (16) aus einem demgegenüber feineren Multifilament-Gewebe besteht mit einer bevorzugten Luftdurchlässigkeit von < 15l/m²/s bei 200 Pascal Luftdruck.

7. Einrichtung nach einem der vorstehenden Ansprüche, **dadurch gekennzeichnet, dass** alle einzelnen Komponenten (16, 24, 26) des Beutels oder Sacks (22) vernäht sind und dass die Nähte (28) zumindest teilweise bevorzugt auf der Innenseite der dahingehenden Verpackung (10) angebracht sind.

8. Einrichtung nach einem der vorstehenden Ansprüche, **dadurch gekennzeichnet, dass** der Beutel oder Sack (22) mit einer Handschlaufe (30) versehen ist, die bevorzugt mit vorgebbarem Abstand den Deckel (24) der Verpackung übergreift und randseitig mit der Außenseite des Mantelteils (16) verbunden, vorzugsweise vernäht, ist.

9. Vorrichtung zur Aufnahme der Einrichtung gemäß der Merkmalsausgestaltung nach einem der vorstehenden Ansprüche, **dadurch gekennzeichnet, dass** ein Korb (34) für die Aufnahme der Einrichtung vorgesehen ist, der gegenüber der Einrichtung eine größere Einbaulänge und einen fluiddurchlässigen Abstützboden (36) aufweist, an dem sich der Boden (26) der Einrichtung in deren Einbauzustand abstützt.

10. Vorrichtung nach Anspruch 9, **dadurch gekennzeichnet, dass** der Korb (34) in einem Vorrichtungsgehäuse (44) derart aufgenommen ist, dass zwischen Korb- und benachbarter Gehäusewand zumindest teilweise ein Strömungsraum (54) gebildet ist, der eine Fluidströmung des fluiden Mediums von einem Fluideingang (58) des Vorrichtungsgehäuses (44) zu der Einrichtung und von dieser zu einem Fluidausgang (64) des Vorrichtungsgehäuses (44) ermöglicht, und dass im Betriebszustand der Vorrichtung die Einrichtung über ihren Deckel (24) und ihren Boden (26) von oben nach unten in einer Richtung durchströmt ist.

11. Vorrichtung nach Anspruch 9 oder 10, **dadurch gekennzeichnet, dass** das Vorrichtungsgehäuse (44) rohrförmig ausgebildet ist und ein abnehmbares Deckelteil (46) aufweist und an seinem Fuß- oder Endteil (42) den Fluidein (58)- sowie den Fluidausgang (62) aufweist und des Weiteren fußseitig eine Entleerstelle (66) besitzt, die verschließbar in den Strömungsraum (54) zwischen Korb (34)- und Vorrichtungsgehäuse (44) ausmündet.

12. Vorrichtung nach einem der Ansprüche 9 bis 11, **dadurch gekennzeichnet, dass** das Fuß- oder Endteil (42) des Vorrichtungsgehäuses (44) als Teil desselben eine Aufnahme für das Korbende des Korbes (34) aufweist.

13. Vorrichtung nach einem der Ansprüche 9 bis 12, **dadurch gekennzeichnet, dass** der Korb (34) an seinem, dem Korbende gegenüberliegenden, weiteren Ende mindestens zwei Langlöcher (50) aufweist, in die eine bevorzugt vor dem Betrieb mit der Vorrichtung entfernbare Handhabe (52) einsetzbar ist.

14. Vorrichtung nach einem der Ansprüche 9 bis 13, **dadurch gekennzeichnet, dass** das fluide Medium über die Langlöcher (50) vonseiten des Strömungsraumes (54) auf die Eintrittsseite der Einrichtung in Form ihres Deckels (24) trifft.

15. Verfahren zur Inbetriebnahme der Vorrichtung nach einem der Ansprüche 9 bis 14 mit einer Einrichtung nach einem der Ansprüche 1 bis 8, **dadurch gekennzeichnet, dass** in einem
- ersten Schritt eine Verpackung (10) der Einrichtung zunächst bestehend aus einem Deckel (24) und einem Mantelteil (16) mit einem Wirkmedium (20) befüllt und dann mit einem Boden (26) verschlossen wird,
- zweiten Schritt die Einrichtung in einem Korb (34) innerhalb oder außerhalb eines Vorrichtungsgehäuses (44) derart platziert wird, dass der Boden (26) der Verpackung (10) auf einem fluiddurchlässigen Boden (36) des Korbes (34) aufsitzt, und
- dritten Schritt bei im Vorrichtungsgehäuse (44) eingesetzten Korb (34) mit der Einrichtung ein Deckelteil (46) mit dem Vorrichtungsgehäuse (44) verbunden wird.

16. Verfahren nach Anspruch 15, **dadurch gekennzeichnet, dass** in einem vierten Schritt die Einrichtung vonseiten des Deckels (24) zu ihrem Boden (26) mit einem fluiden Medium durchströmt wird und dass dabei das Mantelteil (16) der Einrichtung sich vorzugsweise abstands- und faltenfrei auf der Innenseite der Korbwand unter Bilden einer Abdichtung zwischen Einrichtung und Korb (34) anlegt.
